# EUROPÄISCHE PATENTANMELDUNG

(11) **EP 2 030 948 A1**
(43) Veröffentlichungstag der Anmeldung: **04.03.2009**
(21) Anmeldenummer: 08014002.3
(22) Anmeldetag: 05.08.2008
(51) Int. Cl.: C01B 3/00, C01B 3/04

(54) **Speicherung von Wasserstoff**

(30) Priorität: 17.08.2007 DE 102007038965
(71) Anmelder: Linde AG, 80807 München (DE)
(72) Erfinder: Gerhard, Dirk, 68163 Mannheim (DE); Wasserscheid, Prof. Dr. Peter, 91054 Erlangen (DE); Assenbaum, Dipl.-Ing. Daniel, 91054 Erlangen (DE); Schulz, Dr. Peter, 91052 Erlangen (DE)
(74) Vertreter: Zahn, Christoph

(57) **Zusammenfassung**

Es wird ein Speichermedium zum Speichern von Wasserstoff sowie ein Verfahren zum Speichern von Wasserstoff beschrieben.

Das Speichermedium weist einen in wenigstens einer dehydrierbaren ionischen Flüssigkeit vorliegenden Ammoniak-Boran-Komplex auf.

Hierbei beträgt das Mengenverhältnis von Ammoniak-Boran-Komplex zu ionischer Flüssigkeit zwischen 0,01 und 500, vorzugsweise zwischen 0,2 und 10, insbesondere zwischen 0,5 und 20.

## Beschreibung

Die Erfindung betrifft ein Speichermedium sowie ein Verfahren zum Speichern von Wasserstoff.

Die Speicherung von Wasserstoff stellt den Fachmann nicht erst seit der Kommerzialisierung der Brennstoffzellentechnologie vor eine große Herausforderung. Sofern der Anwender bzw. Verbraucher nicht Teil eines Wasserstoffnetzwerkes, wie bspw. in der chemischen Industrie ist, muss der Wasserstoff vom Produzenten zum Verbraucher transportiert werden. Dabei spielt die effiziente Speicherung des Wasserstoffs eine wichtige Rolle.

Die zurzeit gängigen Formen der Druckspeicherung und der tiefkalten Speicherung von Wasserstoff sind aufgrund ihrer geringen gravimetrischen Speicherdichte ineffizient. So können in einer handelsüblichen Stahlflasche mit einem Volumen von 50 L und einem Fülldruck von 300 bar lediglich 1,36 kg Wasserstoff transportiert werden. Bezogen auf das Leergewicht einer derartigen Druckgasflasche von ca. 90 kg entspricht dies nur einer gravimetrischen Speicherdichte von ca. 1,5 Gew-%. Zudem müssen selbst für die moderate Verdichtung auf 200 bar knapp 15 % des spezifischen Energieinhalts des Wasserstoffs aufgebracht werden.

Die Speicherung als flüssiges Medium weist mit bis zu 5 Gew-% zwar eine höhere Speicherdichte aus, zeigt aber deutliche Nachteile, wie die hohe Verlustrate von bis zu 1 Gew-% pro Tag. Der Energiebedarf für die Verflüssigung des Wasserstoffs beträgt außerdem etwa 28 % des spezifischen Energieinhalts. Nachteilig ist weiterhin, dass beide genannten Speicherformen aufwändige "Verpackungen" und Entnahmesysteme erforderlich machen, die letztlich für das hohe Gewicht des Speichersystems verantwortlich sind.

Zur Erhöhung der gravimetrischen Speicherdichte befinden sich Speichersysteme im Versuchsstadium, bei denen die Speicherung des Wasserstoffs an hydrierbaren, organischen Verbindungen, die den Wasserstoff chemisch zu binden vermögen, erfolgt. Hodoshima et al. berichteten 2003 von einem System, beruhend auf Dekalin/Naphthalin, mit dem eine theoretische gravimetrische Speicherdichte von bis zu 8,6 Gew-% erreicht werden kann. Bekannt ist ferner ein Speichersystem, bestehend aus N-Ethylcarbazol/N-Ethyl-9H-carbazol, aus dem reversibel Wasserstoff freigesetzt werden kann. Aus der deutschen Patentanmeldung 102004047986 sind ein gattungsgemäßes Speichermedium sowie Verfahren zur Speicherung von Wasserstoff bekannt, die auf dehydrierbaren ionischen Verbindungen beruhen.

Des Weiteren wird von verschiedenen Forschungsgruppen die Verwendung eines Ammoniak-Boran-Komplexes H₃NBH₃ zur Speicherung von Wasserstoff untersucht. Hierbei kann durch thermische oder metall- oder säurekatalysierte Zersetzung die Freisetzung des chemisch gebundenen Wasserstoffs realisiert werden. Der Ammoniak-Boran-Komplex weist eine theoretische gravimetrische Speicherdichte von 19,4 Gew-% auf. Nachteilig ist jedoch gerade bei der thermischen Freisetzung aus dem Reinstoff eine langsame Kinetik der Wasserstoffproduktion und die Bildung von Boranzin als flüchtiges Nebenprodukt. Bei 85 °C können daher erst nach ca. 20 Stunden 1,1 Äquivalente Wasserstoff gewonnen werden; die Induktionszeit beträgt dabei 60 Minuten.

Aufgabe der vorliegenden Erfindung ist es, ein gattungsgemäßes Speichermedium für Wasserstoff sowie ein gattungsgemäßes Verfahren zur Speicherung von Wasserstoff anzugeben, das eine große gravimetrische Speicherdichte aufweist und zudem eine schnelle Freisetzung des gebundenen Wasserstoffs ermöglicht. Darüber hinaus soll eine nahezu vollständige Regenerierung des Speichermediums möglich sein.

Zur Lösung dieser Aufgabe wird ein Speichermedium vorgeschlagen, das dadurch gekennzeichnet ist, dass es einen in wenigstens einer dehydrierbaren ionischen Flüssigkeit vorliegenden Ammoniak-Boran-Komplex aufweist.

Weitere vorteilhafte Ausgestaltungen des erfindungsgemäßen Speichermediums sowie des erfindungsgemäßen Verfahrens zur Speicherung von Wasserstoff, die Gegenstände der abhängigen Patentansprüche darstellen, sind dadurch gekennzeichnet, dass
- das Mengenverhältnis von Ammoniak-Boran-Komplex zu ionischer Flüssigkeit zwischen 0,01 und 500, vorzugsweise zwischen 0,2 und 10, insbesondere zwischen 0,5 und 20 beträgt,
- der Druck des Speichermediums zwischen 0,1 und 10 bar, vorzugsweise zwischen 0,5 und 5 bar, insbesondere zwischen 0,7 und 2 bar beträgt,
- das Speichermedium einen Katalysator, vorzugsweise einen metallhaltigen Katalysator aufweist,
- wobei die auf den Ammoniak-Boran-Komplex bezogene Katalysator-Menge zwischen 0,001 und 10 Mol-%, vorzugsweise zwischen 0,05 und 5 Mol-%, insbesondere zwischen 0,5 und 2,5 Mol-% beträgt,
- als Katalysator-Material Gold, Silber, Palladium, Rhodium, Ruthenium, Iridium, Platin und/oder Nickel verwendet wird,
- der Katalysator auf einem Träger fixiert ist, wobei als Trägermaterial vorzugsweise Kohlenstoff, Aluminiumoxid, Titanoxid, Siliziumoxid, Zeolithe und/oder sonstige poröse Materialien verwendet werden,
- der Katalysator-Anteil auf dem Träger zwischen 0,1 und 15 Gew-%, vorzugsweise zwischen 0,5 und 10 Gew-%, insbesondere zwischen 1 und 5 Gew-% beträgt, und
- zur Freisetzung des gespeicherten Wasserstoffs das Speichermedium auf eine Temperatur zwischen 20 und 500 °C, vorzugsweise zwischen 50 und 400 °C, insbesondere zwischen 80 und 350 °C gebracht wird.

Erfindungsgemäß wird nunmehr ein Speichersystem zur Wasserstoffspeicherung vorgeschlagen, bei dem ein Ammoniak-Boran-Komplex in einer dehydrierbaren ionischen Flüssigkeit vorliegt. Überraschenderweise ist es möglich, aus diesem Speichersystem bzw. -medium simultan durch Dehydrierung der ionischen Flüssigkeit und Zersetzung des Ammoniak-Boran-Komplexes Wasserstoff freizusetzen.

Die Freisetzung des gebundenen Wasserstoffs findet hierbei erfindungsgemäß bei einer Temperatur zwischen 20 und 500 °C, vorzugsweise zwischen 50 und 400 °C und insbesondere zwischen 80 und 350 °C statt.

Durch den Zusatz einer geeigneten ionischen Flüssigkeit und eines heterogenen (Edel)Metallkatalysators zu dem Ammoniak-Boran-Komplex kann die Menge des generierten Wasserstoffs und die für die Generierung erforderliche Zeit positiv beeinflusst werden.

Das erfindungsgemäße Speichersystem bzw. -medium zeichnet sich durch eine im Vergleich zu bekannten Speichersystemen bzw. -medien erhöhte Speicherkapazität sowie eine schnellere und gleichmäßigere Wasserstoffabgabe aus. Gleichzeitig findet die Freisetzung des Wasserstoffs unter milderen Bedingungen und ohne die Bildung des ungewünschten Nebenproduktes Borazin statt. Darüber hinaus kann das erfindungsgemäße Speichersystem bzw. -medium regeneriert werden. Es steht somit anschließend für eine erneute Wasserstoffabgabe zur Verfügung.

Aufgrund dieser verbesserten Eigenschaften kann das erfindungsgemäße Speichersystem bzw. -medium in allen technischen Anwendungsfeldern, in denen bisher tiefkalte oder flüssige Speicherformen von Wasserstoff realisiert werden, zur Anwendung kommen. Beispielhaft genannt seien mobile Brennstoffzellen, wie sie bei sog. Wasserstoffautos oder portablen Verbrauchern, wie Laptops, MP3-Player oder Mobiletelefonen, Anwendung finden können. Dabei wird die Effizienz von Wasserstoff als Energieträger durch das verringerte Gewicht des gesamten Speichersystems bzw. -mediums wesentlich verbessert.

Das erfindungsgemäße Speichermedium sowie das erfindungsgemäße Verfahren zum Speichern von Wasserstoff seien nachfolgend anhand eines Ausführungsbeispieles näher erläutert.

In einem 60 mL-Autoklaven mit Magnetrührkern werden 4,87 g (0,01 Mol) 1-Methyl-3-[3-(cyclohexyl)propyl]-imidazoliumbis(trifluoromethylsulfonyl)imid vorgelegt und mit 4,87 g (0,16 Mol) Ammoniak-Boran-Komplex und 1,67 g Palladium auf Kohle (5 Gew-%) versetzt. Durch starkes Rühren bei Raumtemperatur wird eine homogene Suspension erhalten. Der Autoklav wird mehrmals mit Argon gespült und anschließend mit einer Heizrate von 1 K/min auf 300 °C erhitzt. Diese Temperatur wird für 3 Stunden gehalten.

Das Volumen des freiwerdenden Gases wird über eine Gasmessapparatur bestimmt. Die Gaszusammensetzung wird mittels gaschromatographischer Methoden untersucht. Die Menge an produziertem Wasserstoff ist über das Volumen, die Reinheit des Gases und dem idealen Gasgesetz zugänglich. Innerhalb von 3 Stunden können auf diese Weise, bezogen auf die Gesamtmasse der eingesetzten Mischung, 6,2 Gew-% reiner Wasserstoff generiert werden.

## Patentansprüche

1. Speichermedium zum Speichern von Wasserstoff, aufweisend einen in wenigstens einer dehydrierbaren ionischen Flüssigkeit vorliegenden Ammoniak-Boran-Komplex.

2. Speichermedium nach Anspruch 1, **dadurch gekennzeichnet, dass** das Mengenverhältnis von Ammoniak-Boran-Komplex zu ionischer Flüssigkeit zwischen 0,01 und 500, vorzugsweise zwischen 0,2 und 10, insbesondere zwischen 0,5 und 20 beträgt.

3. Speichermedium nach Anspruch 1 oder 2, **dadurch gekennzeichnet, dass** der Druck des Speichermediums zwischen 0,1 und 10 bar, vorzugsweise zwischen 0,5 und 5 bar, insbesondere zwischen 0,7 und 2 bar beträgt.

4. Speichermedium nach einem der vorhergehenden Ansprüche 1 bis 3, **dadurch gekennzeichnet, dass** das Speichermedium einen Katalysator, vorzugsweise einen metallhaltigen Katalysator aufweist.

5. Speichermedium nach Anspruch 4, **dadurch gekennzeichnet, dass** die auf den Ammoniak-Boran-Komplex bezogene Katalysator-Menge zwischen 0,001 und 10 Mol-%, vorzugsweise zwischen 0,05 und 5 Mol-%, insbesondere zwischen 0,5 und 2,5 Mol-% beträgt.

6. Speichermedium nach Anspruch 4 oder 5, **dadurch gekennzeichnet, dass** als Katalysator-Material Gold, Silber, Palladium, Rhodium, Ruthenium, Iridium, Platin und/oder Nickel verwendet wird.

7. Speichermedium nach einem der vorhergehenden Ansprüche 4 bis 6, **dadurch gekennzeichnet, dass** der Katalysator auf einem Träger fixiert ist, wobei als Trägermaterial vorzugsweise Kohlenstoff, Aluminiumoxid, Titanoxid, Siliziumoxid, Zeolithe und/oder sonstige poröse Materialien verwendet werden.

8. Speichermedium nach Anspruch 7, **dadurch gekennzeichnet, dass** der Katalysator-Anteil auf dem Träger zwischen 0,1 und 15 Gew-%, vorzugsweise zwischen 0,5 und 10 Gew-%, insbesondere zwischen 1 und 5 Gew-% beträgt.

9. Verfahren zum Speichern von Wasserstoff, **dadurch gekennzeichnet, dass** der Wasserstoff mittels eines Speichermediums gemäß den vorhergehenden Ansprüchen 1 bis 8 gespeichert wird.

10. Verfahren nach Anspruch 9, **dadurch gekennzeichnet, dass** zur Freisetzung des gespeicherten Wasserstoffs das Speichermedium auf eine Temperatur zwischen 20 und 500 °C, vorzugsweise zwischen 50 und 400 °C, insbesondere zwischen 80 und 350 °C gebracht wird.
